# EUROPEAN PATENT APPLICATION

(11) **EP 4 672 807 A1**
(43) Date of publication of application: **31.12.2025**
(21) Application number: 25174469.4
(22) Date of filing: 06.05.2025
(51) Int. Cl.: H04W 24/10, H04W 48/16, H04W 84/12

(54) **APPARATUS, SYSTEM, AND METHOD OF A SENSING MEASUREMENT SESSION**

(30) Priority: 29.06.2024 US 202418759859
(71) Applicant: Intel Corporation, Santa Clara, CA 95054 (US)
(72) Inventor: CHEN, Cheng, 98607, Camas, WA (US); CARIOU, Laurent, Milizac 29290 (FR); CORDEIRO, Carlos, Camas, WA, 98607 (US)
(74) Representative: Viering, Jentschura & Partner mbB Patent- und Rechtsanwälte

(57) **Abstract**

For example, a first STA may be configured to set link ID information in a link ID field to identify one or more first wireless communication links for a sensing measurement session; and to transmit a wireless sensing measurement frame over a second wireless communication link. For example, the wireless sensing measurement frame may include the link ID field, and one or more sensing measurement parameters to configure the sensing measurement session over the one or more first wireless communication links. For example, a second STA may be configured to process the link ID information; to process the wireless sensing measurement frame to identify the one or more sensing measurement parameters to configure the sensing measurement session over the one or more first wireless communication links; and to establish the sensing measurement session over a link of the one or more first wireless communication links.

## Description

### BACKGROUND

Wireless sensing is a term given to a usage of wireless technology to perform radar-like applications. For example, wireless sensing may be used to detect motion in a room, for example, to detect when a person approaches a target device.

The wireless sensing may be implemented by a wireless communication device, which is capable to communicate wireless signals, for example, to detect changes in an environment where the wireless signals propagate.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative aspects.
Fig. 2 is a schematic illustration of a multi-link communication scheme, which may be implemented in accordance with some demonstrative aspects.
Fig. 3 is a schematic illustration of a multi-link communication scheme, which may be implemented in accordance with some demonstrative aspects.
Fig. 4 is a schematic illustration of a sensing measurement parameters element format, which may be implemented in accordance with some demonstrative aspects.
Fig. 5 is a schematic illustration of an Integrated millimeterWave (IMMW) sensing specific subelement format, in accordance with some demonstrative aspects.
Fig. 6 is a schematic illustration of an IMMW sensing specific subelement format, in accordance with some demonstrative aspects.
Fig. 7 is a schematic illustration of a link Identification (ID) bitmap subelement format, in accordance with some demonstrative aspects.
Fig. 8 is a schematic illustration of a sensing measurement parameters subelement format, in accordance with some demonstrative aspects.
Fig. 9 is a schematic illustration of a sensing measurement request frame format, in accordance with some demonstrative aspects.
Fig. 10 is a schematic illustration of a sensing measurement response frame format, in accordance with some demonstrative aspects.
Fig. 11 is a schematic flow-chart illustration of a method of a sensing measurement session, in accordance with some demonstrative aspects.
Fig. 12 is a schematic flow-chart illustration of a method of a sensing measurement session, in accordance with some demonstrative aspects.
Fig. 13 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a User Equipment (UE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 *(IEEE 802.11-2020, IEEE Standard for Information Technology-Telecommunications and Information Exchange between Systems Local and Metropolitan Area Networks-Specific Requirements; Part 11: Wireless LAN Medium Access Control (MAC) and Physical Layer (PHY) Specifications, December, 2020);* IEEE 802.11be *(IEEE P802.11be*/*D5.0 Draft Standard for Information technology-Telecommunications and information exchange between systems Local and metropolitan area networks- Specific requirements; Part 11: Wireless LAN Medium Access Control (MAC) and Physical Layer (PHY) Specifications; Amendment 8: Enhancements for extremely high throughput (EHT), November 2023);* and/or IEEE 802.11bf *(IEEE P802.11bf*/*D4.0 Draft Standard for Information technology-Telecommunications and information exchange between systems Local and metropolitan area networks- Specific requirements; Part 11: Wireless LAN Medium Access Control (MAC) and Physical Layer (PHY) Specifications; Amendment 4: Enhancements for Wireless LAN Sensing, April 2024))* and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{®}, Global Positioning System (GPS), Wi-Fi, Wi-Max, ZigBeeTM, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. **In** one example, the phrase "communicating a signal" may refer to the action of transmitting the signal by a first device, and may not necessarily include the action of receiving the signal by a second device. **In** another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated, or group), and/or memory (shared, dedicated, or group), that execute one or more software or firmware programs, a combinational logic circuit, and/or other suitable hardware components that provide the described functionality. **In** some aspects, some functions associated with the circuitry may be implemented by, one or more software or firmware modules. **In** some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. **In** one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. **In** one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a Wi-Fi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a sub-7GHz frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20GHz and 300GHz, for example, a frequency band above 40GHz, for example, a frequency band above 45GHz, e.g., a 60GHz frequency band, a frequency band between 42.5GHz and 71GHz, and/or any other mmWave frequency band.

Some demonstrative aspects may be used in conjunction with a wireless communication network communicating over the sub-10GHz frequency band and/or the mmWave frequency band, e.g., as described below. However, other aspects may be implemented utilizing any other suitable wireless communication frequency bands, for example, a 5G frequency band, a frequency band below 20GHz, a Sub 1GHz (S1G) band, a WLAN frequency band, a WPAN frequency band, and the like.

Some demonstrative aspects may be implemented by an mmWave STA (mSTA), which may include for example, a STA having a radio transmitter, which is capable of operating on a channel that is within the mmWave frequency band. In one example, mmWave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16GHz channels. For example, the channel bonding mechanisms may include, for example, a mechanism and/or an operation whereby two or more channels, e.g., 2.16GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32GHz, a channel BW of 6.48GHz, a channel BW of 8.64GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

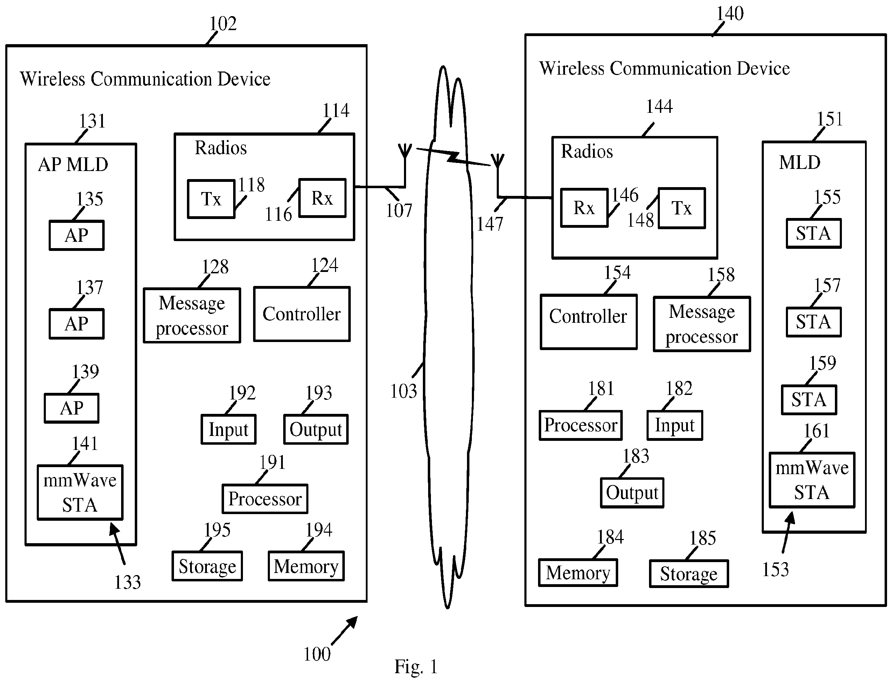

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, and/or one or more other devices.

In some demonstrative aspects, devices 102 and/or 140 may include a mobile device or a non-mobile, e.g., a static, device.

For example, devices 102, and/or 140 may include, for example, a UE, an MD, a STA, an AP, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player, or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a disk drive, a solid-state drive (SSD), and/or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102 and/or 140 may be capable of communicating content, data, information and/or signals via a wireless medium (WM) 103. In some demonstrative aspects, wireless medium 103 may include, for example, a radio channel, an RF channel, a Wi-Fi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10GHz wireless communication frequency band, for example, one or more channels in a sub-7GHz wireless communication frequency band, for example, one or more channels in a 2.4GHz wireless communication frequency band, one or more channels in a 5GHz wireless communication frequency band, and/or one or more channels in a 6GHz wireless communication frequency band. For example, WM 103 may additionally or alternatively include one or more channels in an mmWave wireless communication frequency band, for example, one or more channels in a frequency band above 40GHz, for example, one or more channels in a frequency band above 45GHz, e.g., one or more channels in a 60GHz frequency band, one or more channels in a frequency band between 42.5GHz and 71GHz, and/or one or more channels in any other mmWave frequency band.

In other aspects, WM 103 may include any other type of channel over any other frequency band.

In some demonstrative aspects, device 102 and/or device 140 may include one or more radios including circuitry and/or logic to perform wireless communication between devices 102, 140, and/or one or more other wireless communication devices. For example, device 102 may include one or more radios 114, and/or device 140 may include one or more radios 144.

In some demonstrative aspects, radios 114 and/or 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a sub-10GHz band, for example, a sub-7GHz band, for example, a 2.4GHz band, a 5GHz band, a 6GHz band, and/or any other sub-10GHz and/or sub-7GHz band; and/or an mmWave band, e.g., a 45GHz band, a 60GHz band, a band between 42.5GHz and 71GHz, and/or any other mmWave band; and/or any other band, e.g., a 5G band, an S1G band, and/or any other band.

In some demonstrative aspects, radios 114 and/or 144 may include, or may be associated with one or more antennas.

In some demonstrative aspects, device 102 may include one or more antennas 107, and/or device 140 may include one or more antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

**In** one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. **In** one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

**In** one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. **In** one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or the one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102 and/or device 140 may include, operate as, perform the role of, and/or perform one or more functionalities of, one or more STAs. For example, device 102 may include at least one STA, and/or device 140 may include at least one STA.

In some demonstrative aspects, device 102 and/or device 140 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, for example, device 102 and/or device 140 may be configured to perform one or more operations, and/or functionalities of a Wi-Fi 8 STA.

In other aspects, for example, devices 102 and/or 140 may be configured to perform one or more operations, and/or functionalities of an Ultra High Reliability (UHR) STA.

In other aspects, for example, devices 102 and/or 140 may be configured to perform one or more operations, and/or functionalities of an Integrated mmWave (IMMW) STA.

In other aspects, for example, devices 102 and/or 140 may be configured to perform one or more operations, and/or functionalities of any other additional or alternative type of STA.

In other aspects, devices 102, and/or 140 may include, operate as, perform the role of, and/or perform one or more functionalities of, any other wireless device and/or station, e.g., a WLAN STA, a Wi-Fi STA, and the like.

In some demonstrative aspects, device 102 and/or device 140 may be configured to operate as, perform the role of, and/or perform one or more functionalities of, an access point (AP), e.g., an EHT AP STA, a UHR AP STA, and/or an IMMW AP STA.

In some demonstrative aspects, device 102 and/or device 140 may be configured to operate as, perform the role of, and/or perform one or more functionalities of, a non-AP STA, e.g., an EHT non-AP STA, a UHR non-AP STA, and/or an IMMW non-AP STA.

In other aspects, device 102 and/or device 140 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF). The AP may perform any other additional or alternative functionality.

In some demonstrative aspects devices 102 and/or 140 may be configured to communicate in an EHT network, a UHR network, an IMMW network, and/or any other network.

In some demonstrative aspects, devices 102, 140 and/or 150 may be configured to operate in accordance with one or more Specifications, for example, including one or more *IEEE 802.11 Specifications,* e.g., an *IEEE 802.11-2020 Specification,* an *IEEE 802.11be Specification,* and/or any other specification and/or protocol.

In some demonstrative aspects, device 102 and/or device 140 may include, operate as, perform a role of, and/or perform the functionality of, one or more multi-link logical entities, e.g., as described below.

In other aspect, device 102 and/or device 140 may include, operate as, perform a role of, and/or perform the functionality of, any other entities, e.g., which are not multi-link logical entities.

For example, a multi-link logical entity may include a logical entity that contains one or more STAs. The logical entity may have one MAC data service interface and primitives to the logical link control (LLC) and a single address associated with the interface, which can be used to communicate on a distribution system medium (DSM). For example, the DSM may include a medium or set of media used by a distribution system (DS) for communications between APs, mesh gates, and the portal of an extended service set (ESS). For example, the DS may include a system used to interconnect a set of basic service sets (BSSs) and integrated local area networks (LANs) to create an extended service set (ESS). In one example, a multi-link logical entity may allow STAs within the multi-link logical entity to have the same MAC address. The multi-link entity may perform any other additional or alternative functionality.

In some demonstrative aspects, device 102 and/or device 140 may include, operate as, perform a role of, and/or perform the functionality of, a Multi-Link Device (MLD). For example, device 102 may include, operate as, perform a role of, and/or perform the functionality of, at least one MLD, and/or device 140 may include, operate as, perform a role of, and/or perform the functionality of, at least one MLD, e.g., as described below.

For example, an MLD may include a device that is a logical entity that is capable of supporting more than one affiliated station (STA) and can operate using one or more affiliated STAs. For example, the MLD may present one Medium Access Control (MAC) data service and a single MAC Service Access Point (SAP) to the Logical Link Control (LLC) sublayer. The MLD may perform any other additional or alternative functionality.

In some demonstrative aspects, for example, an infrastructure framework may include a multi-link AP logical entity, which includes APs, e.g., on one side, and a multi-link non-AP logical entity, which includes non-APs, e.g., on the other side.

In some demonstrative aspects, device 102 and/or device 140 may be configured to operate as, perform the role of, and/or perform one or more functionalities of, an AP MLD.

In some demonstrative aspects, device 102 and/or device 140 may be configured to operate as, perform the role of, and/or perform one or more functionalities of, a non-AP MLD.

In other aspects, device 102 and/or device 140 may operate as, perform the role of, and/or perform one or more functionalities of, any other additional or alternative device and/or station.

For example, an AP MLD may include an MLD, where each STA affiliated with the MLD is an AP. In one example, the AP MLD may include a multi-link logical entity, where each STA within the multi-link logical entity is an EHT AP. The AP MLD may perform any other additional or alternative functionality.

For example, a non-AP MLD may include an MLD, where each STA affiliated with the MLD is a non-AP STA. In one example, the non-AP MLD may include a multi-link logical entity, where each STA within the multi-link logical entity is a non-AP EHT STA. The non-AP MLD may perform any other additional or alternative functionality.

In one example, a multi-link infrastructure framework may be configured as an extension from a one link operation between two STAs, e.g., an AP and a non-AP STA.

In some demonstrative aspects, controller 124 may be configured to control, perform and/or to trigger, cause, instruct and/or control device 102 to operate as, perform a role of, and/or perform one or more operations and/or functionalities of, an AP MLD 131 including a plurality of STAs 133, e.g., including an AP STA 135, an AP STA 137, an AP STA 139, and/or an mmWave STA 141. In some aspects, as shown in Fig. 1, AP MLD 131 may include four STAs. In other aspects, AP MLD 131 may include any other number of STAs.

In one example, AP STA 135, AP STA 137, AP STA 139, and/or mmWave STA 141 may operate as, perform a role of, and/or perform one or more operations and/or functionalities of, an EHT AP STA. In other aspects, AP STA 135, AP STA 137, AP STA 139, and/or mmWave STA 141 may perform any other additional or alternative functionality.

In some demonstrative aspects, mmWave STA 141 may operate as, perform a role of, and/or perform one or more operations and/or functionalities of, an mmWave AP STA. In other aspects, mmWave STA 141 may operate as, perform a role of, and/or perform one or more operations and/or functionalities of an mmWave network controller to control communication over an mmWave wireless communication network.

In some demonstrative aspects, for example, the one or more radios 114 may include, for example, a radio for communication by AP STA 135 over a first wireless communication frequency channel and/or frequency band, e.g., a 2.4GHz band, as described below.

In some demonstrative aspects, for example, the one or more radios 114 may include, for example, a radio for communication by AP STA 137 over a second wireless communication frequency channel and/or frequency band, e.g., a 5GHz band, as described below.

In some demonstrative aspects, for example, the one or more radios 114 may include, for example, a radio for communication by AP STA 139 over a third wireless communication frequency channel and/or frequency band, e.g., a 6GHz band, as described below.

In some demonstrative aspects, for example, the one or more radios 114 may include, for example, a radio for communication by mmWave STA 141 over a fourth wireless communication frequency channel and/or frequency band, e.g., an mmWave band, for example, a wireless communication band above 40GHz, for example, a frequency band above 45GHz, e.g., a 60GHz frequency band, a frequency band between 42.5GHz and 71GHz, and/or any other mmWave frequency band, e.g., as described below.

In some demonstrative aspects, the radios 114 utilized by STAs 133 may be implemented as separate radios. In other aspects, the radios 114 utilized by STAs 133 may be implemented by one or more shared and/or common radios and/or radio components.

In other aspects controller 124 may be configured to control, perform and/or to trigger, cause, instruct and/or control device 102 to operate as, perform a role of, and/or perform one or more operations and/or functionalities of, any other additional or alternative entity and/or STA, e.g., a single STA, multiple STAs, and/or a non-MLD entity.

In some demonstrative aspects, controller 154 may be configured to control, perform and/or to trigger, cause, instruct and/or control device 140 to operate as, perform a role of, and/or perform one or more operations and/or functionalities of, an MLD 151 including a plurality of STAs 153, e.g., including a STA 155, a STA 157, a STA 159, and/or a STA 161. In some aspects, as shown in Fig. 1, MLD 151 may include four STAs. In other aspects, MLD 151 may include any other number of STAs.

In one example, STA 155, STA 157, STA 159, and/or STA 161 may operate as, perform a role of, and/or perform one or more operations and/or functionalities of, an EHT STA. In other aspects, STA 155, STA 157, STA 159, and/or STA 161 may perform any other additional or alternative functionality.

In some demonstrative aspects, STA 161 may be configured to operate as, perform a role of, and/or perform one or more operations and/or functionalities of, an mmWave STA, e.g., as described below. For example, the mmWave STA 161 may be configured to operate as, perform a role of, and/or perform one or more operations and/or functionalities of, a non-AP mmWave STA, e.g., as described below.

In some demonstrative aspects, for example, the one or more radios 144 may include, for example, a radio for communication by STA 155 over a first wireless communication frequency channel and/or frequency band, e.g., a 2.4GHz band, as described below.

In some demonstrative aspects, for example, the one or more radios 144 may include, for example, a radio for communication by STA 157 over a second wireless communication frequency channel and/or frequency band, e.g., a 5GHz band, as described below.

In some demonstrative aspects, for example, the one or more radios 144 may include, for example, a radio for communication by STA 159 over a third wireless communication frequency channel and/or frequency band, e.g., a 6GHz band, as described below.

In some demonstrative aspects, for example, the one or more radios 144 may include, for example, a radio for communication by mmWave STA 161 over a fourth wireless communication frequency channel and/or frequency band, e.g., an mmWave band, as described below.

In some demonstrative aspects, the radios 144 utilized by STAs 153 may be implemented as separate radios. In other aspects, the radios 144 utilized by STAs 153 may be implemented by one or more shared and/or common radios and/or radio components.

In some demonstrative aspects, controller 154 may be configured to control, perform and/or to trigger, cause, instruct and/or control MLD 151 to operate as, perform a role of, and/or perform one or more operations and/or functionalities of, a non-AP MLD. For example, STA 155, STA 157, STA 159, and/or mmWave STA 161 may operate as, perform a role of, and/or perform one or more operations and/or functionalities of, a non-AP STA, e.g., a non-AP EHT STA.

In some demonstrative aspects, controller 154 may be configured to control, perform and/or to trigger, cause, instruct and/or control MLD 151 to operate as, perform a role of, and/or perform one or more operations and/or functionalities of, an AP MLD. For example, STA 155, STA 157, STA 159, and/or mmWave STA 161 may operate as, perform a role of, and/or perform one or more operations and/or functionalities of, an AP EHT STA.

In other aspects controller 154 may be configured to control, perform and/or to trigger, cause, instruct and/or control device 140 to operate as, perform a role of, and/or perform one or more operations and/or functionalities of, any other additional or alternative entity and/or STA, e.g., a single STA, multiple STAs, and/or a non-MLD entity.

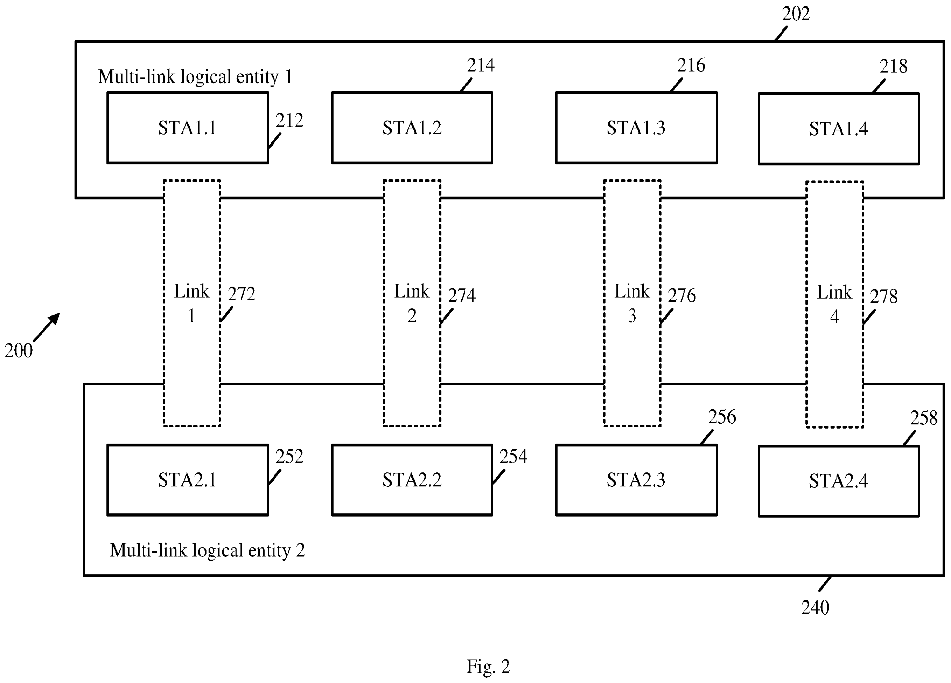

Reference is made to Fig. 2, which schematically illustrates a multi-link communication scheme 200, which may be implemented in accordance with some demonstrative aspects.

As shown in Fig. 2, a first multi-link logical entity 202 ("multi-link logical entity 1"), e.g., a first MLD, may include a plurality of STAs, e.g., including a STA 212, a STA 214, a STA 216, and a STA 218. In one example, AP MLD 131 (Fig. 1) may perform one or more operations of, one or more functionalities of, the role of, and/or the functionality of, multi-link logical entity 202.

As shown in Fig. 2, a second multi-link logical entity 240 ("multi-link logical entity 2"), e.g., a second MLD, may include a plurality of STAs, e.g., including a STA 252, a STA 254, a STA 256, and a STA 258. In one example, MLD 151 (Fig. 1) may perform one or more operations of, one or more functionalities of, the role of, and/or the functionality of, multi-link logical entity 240.

As shown in Fig. 2, multi-link logical entity 202 and multi-link logical entity 240 may be configured to form, setup and/or communicate over a plurality of links, for example, including a link 272 between STA 212 and STA 252, a link 274 between STA 214 and STA 254, a link 276 between STA 216 and STA 256, and/or a link 278 between STA 218 and STA 258.

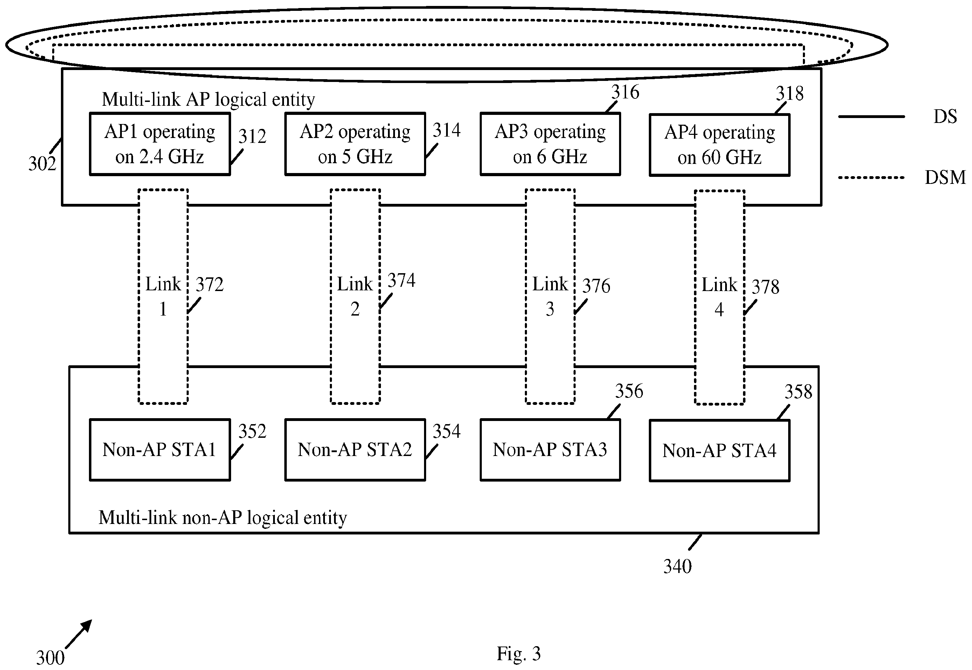

Reference is made to Fig. 3, which schematically illustrates a multi-link communication scheme 300, which may be implemented in accordance with some demonstrative aspects.

As shown in Fig. 3, a multi-link AP logical entity 302, e.g., an AP MLD, may include a plurality of AP STAs, e.g., including an AP STA 312, an AP STA 314, an AP STA 316, and an mmWave STA 318. In one example, AP MLD 131 (Fig. 1) may perform one or more operations of, one or more functionalities of, the role of, and/or the functionality of, multi-link AP logical entity 302.

As shown in Fig. 3, a multi-link non-AP logical entity 340, e.g., a non-AP MLD, may include a plurality of non-AP STAs, e.g., including a non-AP STA 352, a non-AP STA 354, a non-AP STA 356, and an mmWave STA 358. In one example, MLD 151 (Fig. 1) may perform one or more operations of, one or more functionalities of, the role of, and/or the functionality of, multi-link non-AP logical entity 340.

As shown in Fig. 3, multi-link AP logical entity 302 and multi-link non-AP logical entity 340 may be configured to form, setup and/or communicate over a plurality of links, for example, including a link 372 between AP STA 312 and non-AP STA 352, a link 374 between AP STA 314 and non-AP STA 354, a link 376 between AP STA 316 and non-AP STA 356, and/or a link 378 between mmWave STA 318 and mmWave STA 358.

For example, as shown in Fig. 3, multi-link AP logical entity 302 may include a multi-band AP MLD, which may be configured to communicate over a plurality of wireless communication frequency bands. For example, as shown in Fig. 3, AP STA 312 may be configured to communicate over a 2.4GHz frequency band, AP STA 314 may be configured to communicate over a 5GHz frequency band, AP STA 316 may be configured to communicate over a 6GHz frequency band, and/or mmWave STA 318 may be configured to communicate over an mmWave frequency band. In other aspects, AP STA 312, AP STA 314, AP STA 316, and/or mmWave STA 318 may be configured to communicate over any other additional or alternative wireless communication frequency bands.

Referring back to Fig. 1, in some demonstrative aspects, device 102 and/or device 140 may be configured to perform one or more operations of a wireless sensing technique, e.g., as describe below.

In some demonstrative aspects, "wireless sensing" (also referred to as "WLAN sensing" or "Wi-Fi sensing") may refer to a term given to a usage of wireless technology to detect changes in an environment of a device, e.g., an environment of device 102, for example, based on communicated wireless signals, e.g., signals communicated by device 102, for example, with one or more other devices, e.g., including device 140 and/or any other device, and/or signals communicated by device 102 with itself.

In some demonstrative aspects, the environment of the device may include an area around the device, e.g., within a few centimeters or meters from the device. The area may include a room, a house, an enterprise, and the like.

In some demonstrative aspects, WLAN sensing technology may utilize PHY and/or MAC features of a WLAN STA, e.g., an IEEE 802.11 station and/or any other type of wireless station, to obtain channel measurements that characterize the environment in which the station operates.

In some demonstrative aspects, measurements obtained with WLAN sensing may be used to enable and/or support applications such as, for example, presence detection, proximity detection, device-free positioning, gesture classification, among many others.

In one example, the wireless sensing may include performing radar-like applications. For example, wireless sensing may be used to detect motion in a room, for example, to detect when a person approaches a target device.

In some demonstrative aspects, the wireless sensing may be configured to detect one or more features in the environment, for example, a motion, a presence or proximity, a gesture, a people count, a geometry, a velocity, and/or the like.

In some demonstrative aspects, the wireless sensing may be configured to detect a target in the environment, for example, an object, a human, an animal, and/or the like.

In some demonstrative aspects, device 102 and/or device 140 may be configured to perform one or more operations of a wireless sensing mechanism, e.g., in accordance with an *IEEE 802.11bf Standard* and/or any other suitable wireless sensing protocol, standard and/or specification, e.g., as described below.

For example, the wireless sensing mechanism may be configured to use PHY and/or MAC features of one or more STAs, e.g., high-efficiency (HE) STAs, mmWave STAs, and/or EHT STAs, for example, to obtain measurements, which may be useful to estimate one or more features, e.g., range, velocity, and/or motion, of objects in an area of interest.

In some demonstrative aspects, the wireless sensing mechanism may be configured to provide a technical solution to use Wi-Fi technology to perform radar-like applications, such as detecting motion in a room, detecting when a person approaches a target device, and/or performing any other additional or alternative motion detection operations.

In some demonstrative aspects, the wireless sensing mechanism may be configured to provide a technical solution to perform sensing, for example, by tracking channel estimates obtained when decoding multiple Wi-Fi packets over time, and detecting variations that indicate an event of interest.

In some demonstrative aspects, the wireless sensing mechanism may be configured to utilize one or more measurement flows, for example, in accordance with an *IEEE 802.11bf Standard,* e.g., as described below.

In some demonstrative aspects, the wireless sensing mechanism may be configured according to a Trigger-based (TB) measurement flow, for example, in accordance with an *IEEE 802.11bf Standard.*

In other aspects, the wireless sensing mechanism may be configured according to a Non-Trigger-based (NTB) measurement flow, for example, in accordance with an *IEEE 802.11bf Standard.*

In some demonstrative aspects, TB sensing measurement exchanges may be configured to utilize an AP-centric sensing measurement mechanism, for example, in accordance with an *IEEE 802.11bf Standard.*

For example, the AP may perform one or more operations of, and/or the role of, a sensing initiator, which may be configured to initiate a sensing procedure, e.g., as described below.

In one example, an AP may perform one or more operations of a TB sensing measurement exchange, for example, to manage and/or schedule one or more sensing measurements between the AP and a STA.

In another example, an AP may perform one or more operations of a TB sensing measurement exchange, for example, to manage and/or schedule one or more sensing measurements between two or more STAs.

For example, the AP may initiate a TB sensing measurement exchange in accordance with a STA to STA sensing sounding mechanism, for example, a Sensing Responder to Sensing Responder (SR2SR) sensing sounding, e.g., in accordance with an *IEEE 802.11bf Standard.*

For example, the AP may schedule a first STA operating as a sensing transmitter to send sensing PPDUs to a second STA operating as a sensing receiver.

For example, a sensing initiator may include a STA, e.g., an HE STA and/or an EHT STA, that initiates a sensing procedure, for example, by transmitting a sensing measurement request frame, or a DMG STA that initiates a DMG sensing procedure by transmitting a DMG Sensing Measurement Request frame. The sensing initiator may perform any other additional or alternative operations, role, and/or functionality.

For example, a sensing responder may include a STA, e.g., an HE STA and/or an EHT STA, that participates in a sensing procedure, for example, by responding to a sensing initiator, or a DMG STA that participates in a DMG sensing procedure, for example, by responding to a sensing initiator. The sensing responder may perform any other additional or alternative operations, role, and/or functionality.

For example, a sensing transmitter may include a STA that transmits PPDUs used for measurements in a sensing procedure and/or in a DMG sensing procedure. The sensing transmitter may perform any other additional or alternative operations, role, and/or functionality.

For example, a sensing receiver may include a STA that is an intended recipient of PPDUs sent by a sensing transmitter to obtain sensing measurements, for example, in either a sensing procedure or a DMG sensing procedure. The sensing receiver may perform any other additional or alternative operations, role, and/or functionality.

In some demonstrative aspects, device 102 and/or device 140 may be configured to implement one or more operations and/or functionalities of a Multi-Link Operation (MLO) mechanism, which may be configured to support wireless communication over an mmWave link, e.g., as described below.

In some demonstrative aspects, device 102 and/or device 140 may be configured to implement one or more operations and/or functionalities of an MLO mechanism, which may be configured to provide a technical solution to support mmWave operation, e.g., operation at an mmWave band, together with, a sub-10GHz functionality, for example, according to a suitable mainstream Wi-Fi protocol, e.g., as described below.

In some demonstrative aspects, device 102 and/or device 140 may be configured to implement one or more operations and/or functionalities of an MLO mechanism, which may be configured to provide a technical solution to support reuse of at least some components of, e.g., as much as possible of, the same baseband, for communications by both a sub-10GHz radio, e.g., a regular Wi-Fi radio, and an mmWave radio, e.g., a 60GHz radio, e.g., as described below.

In some demonstrative aspects, device 102 and/or device 140 may be configured to implement one or more operations and/or functionalities of an MLO mechanism, which may be configured based on, and/or may utilize, a multi-link framework, for example, according to an MLD architecture, e.g., as described above.

In some demonstrative aspects, device 102 and/or device 140 may be configured to implement one or more operations and/or functionalities of an MLO mechanism, which may be configured to provide a technical solution to support an IMMW technology, for example, to define a Wi-Fi interface for communication over an mmWave band, e.g., as described below.

For example, the IMMW technology may be configured to provide a technical solution to reduce complexity, e.g., to a low complexity as possible, for example, by reusing in the mmWave band at least some, e.g., most, of a PHY PPDU structure and/or a PHY procedure as in a lower band, e.g., the sub-10GHz band.

For example, it may be defined, e.g., according to the IMMW technology, that a device may not be allowed to operate as an mmWave-only device.

For example, it may be defined, e.g., according to the IMMW technology, that an IMMW device, e.g., an IMMW STA, may be configured to support the use of an mmWave link in the mmWave band, for example, together with a sub-10GHz link in the sub-10GHz band, e.g., in the lower bands of 2.4GHz, 5GHz, and/or 6GHz.

For example, it may be defined, e.g., according to the IMMW technology, that an IMMW device, e.g., an IMMW STA, may be configured to support Multi-Link Operation (MLO), e.g., in accordance with an *IEEE 802.11be Specification.*

For example, it may be defined, e.g., according to the IMMW technology, that an IMMW device, e.g., an IMMW STA, may be configured to utilize the MLO, for example, to provide a technical solution to support significant reduction in complexity of an mmWave interface, for example, by using a link in a lower band, e.g., a sub-10GHz link, to support the mmWave link.

For example, it may be defined, e.g., according to the IMMW technology, that an IMMW device, e.g., an IMMW STA, may be configured to utilize communications over the sub-10GHz band, for example, for discovery, association, broadcast transmissions, or the like.

For example, it may be defined, e.g., according to the IMMW technology, that an IMMW device, e.g., an IMMW STA, may be configured to selectively restrict communications over the mmWave band based on one or more restrictions and/or conditions.

For example, it may be defined, e.g., according to the IMMW technology, that an IMMW device, e.g., an IMMW STA, may be configured to only use the mmWave link, e.g., when needed for data transmissions.

In some demonstrative aspects, device 102 and/or device 140 may be configured to implement one or more operations and/or functionalities of an MLO mechanism, which may be configured to support reduced power consumption for communication in an mmWave band. For example, the power consumption for communication in the mmWave band may be higher than a power consumption for communication in a lower band, e.g., a sub-10GHz band.

For example, the power consumption in the mmWave band may be reduced, for example, by limiting a listen time in the mmWave band, for example, by only waking up the mmWave link when really needed.

In some demonstrative aspects, device 102 and/or device 140 may be configured to implement one or more operations and/or functionalities of an MLO mechanism, which may be configured to provide a technical solution to support reduced power consumption for communication over an mmWave link, e.g., as described below.

In some demonstrative aspects, the MLO mechanism may be configured to support communication between associated STAs, for example, using at least one link in the sub-10GHz band, e.g., a 2.4GHz band, a 5GHz band, and/or a 6GHz band, and at least one link in the mmWave band, e.g., as described below.

In some demonstrative aspects, device 102 and/or device 140 may be configured to perform one or more operations and/or functionalities of a sensing measurement setup mechanism, which may be configured to support wireless sensing for IMMW STAs, e.g., as described below.

In some demonstrative aspects, the sensing measurement setup mechanism may be configured to provide a technical solution to support PHY and/or MAC protocols, which may be implemented by IMMW STAs, e.g., as described below.

For example, it may be defined, e.g., according to an IMMW technology, that an IMMW device, e.g., an IMMW STA, may be configured to utilize PHY and/or MAC protocols for mmWave bands, which may be different, for example, from PHY and/or MAC protocols utilized by mmWave STAs, for example, for mmWave sensing in accordance with the *IEEE 802.11bf Specification.*

For example, a new set of sensing protocols may be defined for IMMW, for example, in order to include sensing as part of an IMMW scope.

For example, the new set of sensing protocols for IMMW may be based on new IMMW PHY and/or MAC protocols, e.g., which may be different from the MAC and PHY protocols defined by the *IEEE 802.11ad Specification* and/or the *IEEE 802.11ay Specification.*

For example, the IMMW technology may be configured to reuse at least part of existing PHY and/or MAC protocols, which may be defined for sub-7GHz functionality.

In some demonstrative aspects, sensing protocols defined for sub-7GHz, e.g., in accordance with the *IEEE 802.11bf Specification,* may be reconfigured to be used over an mmWave band, e.g., as described below.

In some demonstrative aspects, device 102 and/or device 140 may be configured to perform one or more operations of a sensing procedure, which may include one or more phases, for example, a sensing capabilities exchange phase, a sensing measurement session setup phase, a sensing measurement exchange phase, a sensing measurement session termination phase, and/or any other additional or alternative phase.

In some demonstrative aspects, the sensing capabilities exchange phase may be configured, for example, by extending a multi-link discovery procedure, e.g., which may be defined for the sub-7GHz band, to an IMMW framework.

For example, one or more operations, e.g., all operations, of a mmWave sensing capabilities exchange in IMMW may be performed at a sub-7GHz discovery and/or association phase.

For example, the sensing measurement session setup phase may include a process to negotiate and agree on sensing measurement parameters that may be used in later sensing measurement exchanges, e.g., as described below.

For example, a sensing measurement session setup phase, e.g., in accordance with the *IEEE 802.11bf Specification,* may be performed on a per link-level. For example, in accordance with the *IEEE 802.11bf Specification,* a STA may be allowed to only negotiate and establish a sensing measurement session on a current link.

For example, in some use cases, implementations, and/or scenarios, the negotiation process of the sensing measurement session setup phase may require some back-and-forth effort, and/or may be quite overlength. This overhead may be acceptable for some implementations, e.g., for sub-7 GHz implementations. However, this overhead may be burdensome for some implementations, e.g., for mmWave band implementations.

In some demonstrative aspects, device 102 and/or device 140 may be configured to perform one or more operations and/or functionalities of a sensing measurement setup mechanism, which may be configured to provide a technical solution to support a sensing measurement session setup phase to be performed over a first link, for example, in order to setup a sensing measurement session, which is to be performed over a second link, e.g., as described below.

In some demonstrative aspects, device 102 and/or device 140 may be configured to perform one or more operations and/or functionalities of a sensing measurement setup mechanism, which may be configured to provide a technical solution to support a cross-link sensing session negotiation and setup, e.g., as described below.

In some demonstrative aspects, the cross-link sensing session negotiation and setup may be configured to utilize a first link to negotiate and/or set up a sensing measurement session to be performed over a second link, e.g., as described below.

In some demonstrative aspects, device 102 and/or device 140 may be configured to perform one or more operations and/or functionalities of a sensing measurement setup mechanism, which may be configured to provide a technical solution to support a sensing measurement session setup phase to be performed over a sub-10Ghz band, for example, in order to setup a sensing measurement session, which is to be performed over an mmWave band, e.g., as described below.

In some demonstrative aspects, device 102 and/or device 140 may be configured to perform one or more operations and/or functionalities of a sensing measurement setup mechanism, which may be configured to provide a technical solution to support a technology, e.g., an IMMW technology, for example, to delegate some, or even all, management and/or control operations for mmWave bands to sub-7 GHz bands, e.g., as much as possible. For example, delegating some, or even all, management and/or control operations for mmWave bands to sub-7 GHz bands, may provide a technical solution to better focus on high-speed data communications at the mmWave band.

In some demonstrative aspects, device 102 and/or device 140 may be configured to perform one or more operations and/or functionalities of a sensing measurement setup mechanism, which may be configured to provide a technical solution to delegate some, or even, all operations of the negotiation and setup process for the mmWave band to the sub-7 GHz bands, e.g., as described below.

In some demonstrative aspects, device 102 and/or device 140 may be configured to perform one or more operations and/or functionalities of a sensing measurement exchange over an mmWave band.

For example, the sensing measurement exchange may include actual sensing measurements, which may be taken upon transmitted and/or received sensing PPDUs, for example, over the mmWave band.

In some demonstrative aspects, device 102 and/or device 140 may be configured to perform one or more operations and/or functionalities of a sensing measurement session termination mechanism, which may support termination of an existing sensing measurement session.

In some demonstrative aspects, device 102 and/or device 140 may be configured to perform one or more operations and/or functionalities of a cross-link sensing measurement session setup mechanism, which may be configured to provide a technical solution to support cross-link sensing measurement session negotiation and/or setup, e.g., as described below.

In some demonstrative aspects, the cross-link sensing measurement session setup mechanism may be configured to provide a technical solution to support offloading from an mmWave band to a sub-7GHz band a sensing measurement session negotiation and/or setup process, which may be lengthy and burdensome, e.g., as described below.

For example, offloading the sensing measurement session negotiation and/or setup process from the mmWave band to the sub-7GHz band may provide a technical solution to reduce unnecessary management and/or control function overhead at the mmWave band. For example, this approach may be consistent with a design philosophy of an IMMW technology.

In some demonstrative aspects, the cross-link sensing measurement session setup mechanism may be configured to provide a technical solution to support reusing an existing sub-7GHz protocol, e.g., which may be defined in accordance with the *IEEE 802.11bf Specification,* for example, with relatively minimal changes.

In some demonstrative aspects, the cross-link sensing measurement session setup mechanism described herein may be configured to provide a technical solution, which may potentially be extended, for example, to support STAs, e.g., future-generation non-IMMW STAs, in performing a cross-link sensing negotiation and/or setup in sub-7GHz bands, for example, to reduce management and/or control function overhead for a specific sub-7GHz band. For example, the cross-link sensing measurement session setup mechanism described herein may be utilized by a STA operating at a first sub-7Ghz band. e.g., a 2.4GHz band, for example, to negotiate a sensing measurement session that is expected to take place at a second sub-7Ghz band, e.g., a 6GHz band.

In some demonstrative aspects, device 102 and/or device 140 may be configured to perform one or more operations and/or functionalities of a cross-link sensing measurement session setup mechanism, which may be configured to provide a technical solution to support configuration of a sensing measurement session over one or more first wireless communication links, for example, by communication of one or more sensing measurement parameters over a second wireless communication link, e.g., as described below.

In some demonstrative aspects, controller 154 may be configured to control, trigger, cause, and/or instruct a STA implemented by device 140 to set link Identification (ID) information in a link ID field, for example, to identify one or more first wireless communication links for a sensing measurement session, e.g., as described below.

In some demonstrative aspects, controller 154 may be configured to control, trigger, cause, and/or instruct the STA implemented by device 140 to transmit a wireless sensing measurement frame over a second wireless communication link, e.g., as described below.

In some demonstrative aspects, the wireless sensing measurement frame may include the link ID field, e.g., as described below.

In some demonstrative aspects, the wireless sensing measurement frame may include one or more sensing measurement parameters to configure the sensing measurement session over the one or more first wireless communication links, e.g., as described below.

In some demonstrative aspects, the wireless sensing measurement frame may include the link ID field and the one or more sensing measurement parameters, e.g., as described below.

In some demonstrative aspects, the link ID field may have a size of 16 bits, e.g., as described below.

In other aspects, the link ID field may have any other size.

In some demonstrative aspects, the wireless sensing measurement frame may include a wireless sensing measurement request frame, e.g., as described below.

In some demonstrative aspects, the wireless sensing measurement frame may include a wireless sensing measurement response frame, e.g., as described below.

In other aspects, the wireless sensing measurement frame may include any other suitable type of wireless sensing measurement frame.

In some demonstrative aspects, controller 154 may be configured to control, trigger, cause, and/or instruct the STA implemented by device 140 to establish the sensing measurement session over a link of the one or more first wireless communication links, e.g., as described below.

In some demonstrative aspects, controller 124 may be configured to control, trigger, cause, and/or instruct a STA implemented by device 102 to process link ID information in a link ID field, for example, to identify one or more first wireless communication links for a sensing measurement session, e.g., as described below.

In some demonstrative aspects, the link ID field may be in a wireless sensing measurement frame received over a second wireless communication link, e.g., as described below.

For example, the received wireless sensing measurement frame, which is received by the STA implemented by device 102, may include the wireless sensing measurement frame transmitted from the STA implemented by device 140.

In some demonstrative aspects, controller 124 may be configured to control, trigger, cause, and/or instruct the STA implemented by device 102 to process the wireless sensing measurement frame to identify one or more sensing measurement parameters to configure the sensing measurement session over the one or more first wireless communication links, e.g., as described below.

In some demonstrative aspects, controller 124 may be configured to control, trigger, cause, and/or instruct the STA implemented by device 102 to establish the sensing measurement session over a link of the one or more first wireless communication links, e.g., as described below.

In some demonstrative aspects, controller 154 may be configured to control, trigger, cause, and/or instruct the STA implemented by device 140 to transmit the wireless sensing measurement frame as part of a cross-link sensing measurement session setup, e.g., as described below.

In some demonstrative aspects, the cross-link sensing measurement session setup may include negotiation of the sensing measurement session over the second wireless communication link, e.g., as described below.

In some demonstrative aspects, the cross-link sensing measurement session setup may include establishment of the sensing measurement session over a negotiated link of the one or more first wireless communication links, e.g., as described below.

In some demonstrative aspects, controller 124 may be configured to control, trigger, cause, and/or instruct the STA implemented by device 102 to process the wireless sensing measurement frame as part of the cross-link sensing measurement session setup, e.g., as described below.

In some demonstrative aspects, the one or more first wireless communication links may include one or more mmWave links in a mmWave band, and the second wireless communication link may include a sub-10GHz link in a sub-10GHz band, e.g., as described below.

In some demonstrative aspects, the one or more first wireless communication links may include one or more first sub-10GHz links in a sub-10GHz band, and the second wireless communication link may include a second sub-10GHz link in the sub-10GHz band, e.g., as described below.

In other aspects, the one or more first wireless communication links and/or the second wireless communication link may include any other combination of links over one or more wireless communication frequency bands.

In some demonstrative aspects, the STA implemented by device 140 may include a STA of an MLD.

In some demonstrative aspects, the STA implemented by device 140 may include an IMMW STA.

In other aspects, the STA implemented by device 140 may include any other type of STA.

In some demonstrative aspects, the STA implemented by device 102 may include a STA of an MLD.

In some demonstrative aspects, the STA implemented by device 102 may include an IMMW STA.

In other aspects, the STA implemented by device 102 may include any other type of STA.

In some demonstrative aspects, the link ID field may include a link ID bitmap field, e.g., as described below.

In some demonstrative aspects, the link ID field may include the link ID information including a link ID bitmap, e.g., as described below.

In some demonstrative aspects, the link ID bitmap may include a plurality of bits corresponding to a plurality of links, e.g., as described below.

In some demonstrative aspects, a setting of the plurality of bits may be configured to identify the one or more first wireless communication links for the sensing measurement session, e.g., as described below.

In some demonstrative aspects, controller 154 may be configured to control, trigger, cause, and/or instruct the STA implemented by device 140 to set a bit corresponding to a link of the plurality of links to a predefined bit value, for example, to indicate that the one or more sensing measurement parameters are to configure the sensing measurement session over the link, e.g., as described below.

In some demonstrative aspects, controller 124 may be configured to control, trigger, cause, and/or instruct the STA implemented by device 102 to process the bit corresponding to a link of the plurality of links, for example, to identify the predefined bit value to indicate that the one or more sensing measurement parameters are to configure the sensing measurement session over the link, e.g., as described below.

In some demonstrative aspects, the predefined bit value may include a value of one.

In other aspects, the predefined bit value may include any other value.

In some demonstrative aspects, controller 154 may be configured to control, trigger, cause, and/or instruct the STA implemented by device 140 to set the link ID field in a sensing measurement parameters element in the wireless sensing measurement frame, e.g., as described below.

In some demonstrative aspects, the sensing measurement parameters element may include the one or more sensing measurement parameters, e.g., as described below.

In some demonstrative aspects, controller 124 may be configured to control, trigger, cause, and/or instruct the STA implemented by device 102 to identify the link ID field in the sensing measurement parameters element in the wireless sensing measurement frame, e.g., as described below.

In some demonstrative aspects, controller 154 may be configured to control, trigger, cause, and/or instruct the STA implemented by device 140 to set the link ID field in a sensing subelement in the sensing measurement parameters element, e.g., as described below.

In some demonstrative aspects, controller 124 may be configured to control, trigger, cause, and/or instruct the STA implemented by device 102 to identify the link ID field in the sensing subelement in the sensing measurement parameters element, e.g., as described below.

In some demonstrative aspects, the sensing subelement may include an IMMW sensing specific subelement, e.g., as described below.

In some demonstrative aspects, the IMMW sensing specific subelement may include information to configure sensing measurements between IMMW STAs, e.g., as described below.

In some demonstrative aspects, the sensing subelement may include a link ID information subelement, e.g., as described below.

In other aspects, the sensing subelement may include, or may be implemented in the form of, any other additional or alternative subelement.

In some demonstrative aspects, controller 154 may be configured to control, trigger, cause, and/or instruct the STA implemented by device 140 to set a link ID information present field in the sensing measurement parameters element to a predefined value, for example, to indicate presence of the link ID information subelement, e.g., as described below.

In some demonstrative aspects, controller 124 may be configured to control, trigger, cause, and/or instruct the STA implemented by device 102 to process the link ID information present field in the sensing measurement parameters element, for example, to identify the predefined value to indicate presence of the link ID information subelement, e.g., as described below.

In some demonstrative aspects, the sensing subelement may be located after a sensing measurement parameters field including the one or more sensing measurement parameters, e.g., as described below.

In other aspects, the sensing subelement may be located at any other location in the sensing measurement parameters element.

In some demonstrative aspects, controller 154 may be configured to control, trigger, cause, and/or instruct the STA implemented by device 140 to set a subelement ID field in the sensing subelement, which includes the link ID field, to a value greater than 2, e.g., as described below.

In some demonstrative aspects, controller 154 may be configured to control, trigger, cause, and/or instruct the STA implemented by device 140 to set the subelement ID field in the sensing subelement, which includes the link ID field, to a value of 3, e.g., as described below.

In some demonstrative aspects, controller 154 may be configured to control, trigger, cause, and/or instruct the STA implemented by device 140 to set the subelement ID field in the sensing subelement, which includes the link ID field, to a value of 4, e.g., as described below.

In other aspects, controller 154 may be configured to control, trigger, cause, and/or instruct the STA implemented by device 140 to set the subelement ID field in the sensing subelement, which includes the link ID field, to any other suitable value.

In some demonstrative aspects, controller 154 may be configured to control, trigger, cause, and/or instruct the STA implemented by device 140 to set the link ID field in an MLO link information (info) element in the wireless sensing measurement frame, e.g., as described below.

In some demonstrative aspects, the wireless sensing measurement frame may include a sensing measurement parameters element including the one or more sensing measurement parameters, e.g., as described below.

In some demonstrative aspects, controller 124 may be configured to control, trigger, cause, and/or instruct the STA implemented by device 102 to identify the link ID field in the MLO link info element in the wireless sensing measurement frame, e.g., as described below.

In some demonstrative aspects, controller 124 may be configured to control, trigger, cause, and/or instruct the STA implemented by device 102 to process the wireless sensing measurement frame, for example, to identify a sensing measurement parameters element including the one or more sensing measurement parameters, e.g., as described below.

In some demonstrative aspects, the MLO link info element may be located after the sensing measurement parameters element, e.g., as described below.

In other aspects, the MLO link info element may be located at any other location in the wireless sensing measurement frame.

In some demonstrative aspects, device 102 and/or device 140 may be configured to perform one or more operations and/or functionalities of a sensing measurement setup mechanism, which may be configured to support a cross-link measurement session setup, e.g., as described below.

In some demonstrative aspects, device 102 and/or device 140 may be configured to perform one or more operations and/or functionalities of a sensing measurement setup mechanism, which may be configured to provide a technical solution to support a cross-link measurement session setup for IMMW, e.g., as described below.

In some demonstrative aspects, the sensing measurement setup mechanism may be configured to support communication of a link ID bitmap field within a sensing measurement parameters element, e.g., as described below.

For example, the link ID bitmap field may be configured indicate one or more links to which a sensing measurement request frame sent by a STA affiliated with an MLD applies.

In some demonstrative aspects, the sensing measurement setup mechanism may be configured to support communication of an MLO link info element within a sensing measurement request frame and/or a sensing measurement response frame, e.g., as described below.

In some demonstrative aspects, an IMMW sensing specific subelement may be defined, e.g., in the form of a new subelement, in the sensing measurement parameters element, e.g., as described below.

For example, the IMMW sensing specific subelement may be configured to include additional information that applies, e.g., only applies, to IMMW STAs.

In some demonstrative aspects, the sensing measurement setup mechanism may define that a link ID bitmap field is to be added to a sensing measurement parameter element, for example, to enable signaling of cross-link sensing measurement session negotiation and setup, e.g., as described below.

In some demonstrative aspects, a location of the link ID bitmap field in the sensing measurement parameter element may be defined, for example, depending on whether the cross-link sensing measurement session negotiation and setup is to be enabled only for IMMW band, or also for exiting sub-7GHz bands, e.g., as described below.

In some demonstrative aspects, the sensing measurement parameter element may include a new sensing subelement, which may be referred to as an "IMMW sensing specific subelement", e.g., as described below.

In some demonstrative aspects, the IMMW Sensing Specific subelement may include the Link ID Bitmap and/or any other additional or alternative information fields, for example, that are defined exclusively for an IMMW use, e.g., as described below.

In some demonstrative aspects, the sensing measurement parameter element may include a new Link ID Bitmap subelement, e.g., as described below.

In some demonstrative aspects, the Link ID Bitmap subelement may be configured, e.g., for general use by both IMMW STAs and non-IMMW STAs, for example, to enable cross-link sensing measurement session negotiation and setup, for example, in a manner which is not exclusively defined for IMMW.

In some demonstrative aspects, a new IMMW Sensing Specific subelement may be defined to include any other information fields that apply, e.g., only apply, to the IMMW, e.g., as described below.

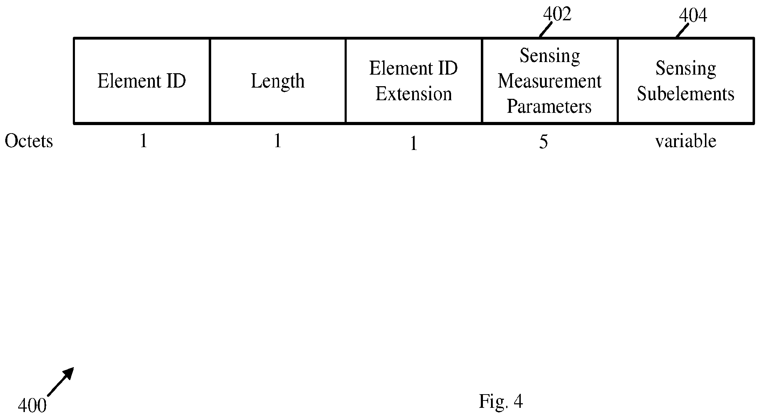

Reference is made to Fig. 4, which schematically illustrates a format of a sensing measurement parameters element 400, which may be implemented in accordance with some demonstrative aspects.

For example, device 102 (Fig. 1) and/or device 140 (Fig. 1) may be configured to generate, process and/or communicate one or more frames and/or messages including the sensing measurement parameters element 400.

In some demonstrative aspects, as shown in Fig. 4, sensing measurement parameters element 400 may include a plurality of subelements, e.g., including a sensing measurement parameters subelement 402 and sensing subelements 404, which may configure a sensing measurement session over one or more wireless communication links.

In some demonstrative aspects, as shown in Fig. 4, sensing subelements 404 may be located after sensing measurement parameters subelement 402.

In some demonstrative aspects, sensing measurement parameters element 400 may include link ID information in a link ID field, for example, to identify the one or more wireless communication links for the sensing measurement session, e.g., as described below.

In some demonstrative aspects, the sensing subelements 404 may include an IMMW sensing specific subelement, e.g., as described below.

In some demonstrative aspects, the sensing subelements 404 may include the link ID information, for example, in the IMMW sensing specific subelement, e.g., as described below.

In some demonstrative aspects, the sensing subelements 404 may be defined, e.g., as follows:

**Table 1**

| Subelement ID | Name | Extensible |
|---|---|---|
| 0 | Non-TB Sensing Specific subelement | Yes |
| 1 | TB Sensing Specific subelement | Yes |
| 2 | SBP Specific subelement | Yes |
| 3 | IMMW Sensing Specific subelement | Yes |
| 4 | Reserved | |

In some demonstrative aspects, as shown in line 4 of Table 1, a subelement ID of the IMMW sensing specific subelement may be set to a value 3.

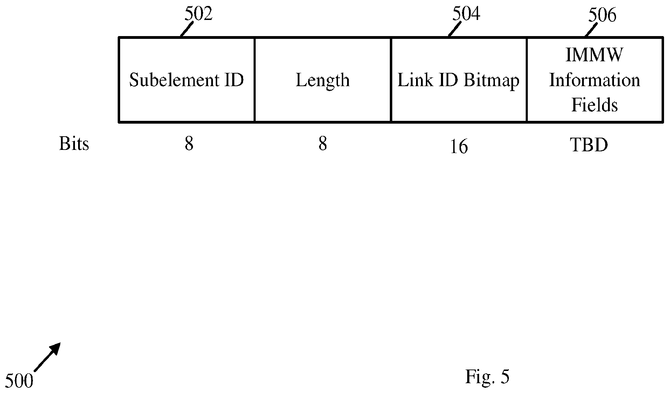

Reference is made to Fig. 5, which schematically illustrates a format of an IMMW sensing specific subelement 500, in accordance with some demonstrative aspects. For example, sensing subelements 404 (Fig. 4) may include IMMW sensing specific subelement 500.

In some demonstrative aspects, as shown in Fig. 5, the IMMW sensing specific subelement 500 may include a subelement ID field 502.

For example, the subelement ID field 502 may be set to a value greater than 2, e.g., to identify that the subelement 500 is to be interpreted as an IMMW sensing specific subelement.

In some demonstrative aspects, the subelement ID field 502 may be set to a value of 3, e.g., in accordance with Table 1.

In other aspects, the subelement ID field 502 may be set to any other suitable value greater than 2.

In some demonstrative aspects, as shown in Fig. 5, the IMMW sensing specific subelement 500 may include a link ID bitmap subelement 504, which may be configured to include link ID information.

In some demonstrative aspects, the link ID information may include a link ID bitmap including a plurality of bits to identify one or more communication links for a sensing measurement session, e.g., as described above.

In some demonstrative aspects, the link ID bitmap subelement 504 may have a size of 16 bits.

In other aspects, the link ID bitmap subelement 504 may have any other size.

In some demonstrative aspects, as shown in Fig. 5, the IMMW sensing specific subelement 500 may include an IMMW information fields subelement 506.

In some demonstrative aspects, the IMMW information fields subelement 506 may include IMMW-specific information, for example, to configure sensing measurements between IMMW STAs.

Referring back to Fig. 4, in some demonstrative aspects, the sensing subelements 404 may be configured to include a link ID information subelement, which may include link ID information, for example, to identify one or more wireless communication links for a sensing measurement session.

In some demonstrative aspects, the sensing subelements 404 may be defined, e.g., as follows:

**Table 2**

| Subelement ID | Name | Extensible |
|---|---|---|
| 0 | Non-TB Sensing Specific subelement | Yes |
| 1 | TB Sensing Specific subelement | Yes |
| 2 | SBP Specific subelement | Yes |
| 3 | IMMW Sensing Specific subelement | Yes |
| 4 | Link ID Bitmap subelement | Yes |
| 5 | Reserved | |

In some demonstrative aspects, as shown in line 4 of Table 2, the sensing subelements 404 may include an IMMW sensing specific subelement.

In some demonstrative aspects, as shown in line 4 of Table 2, a subelement ID of the IMMW sensing specific subelement may be set to a value of 3.

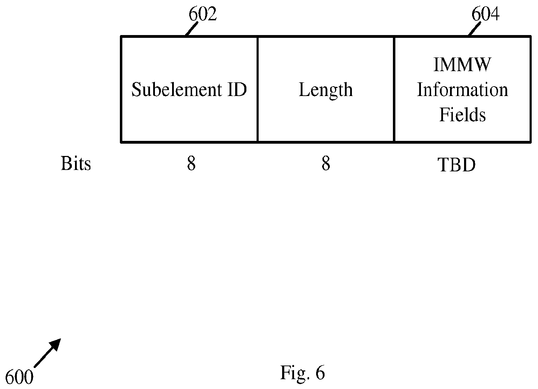

Reference is made to Fig. 6, which schematically illustrates a format of an IMMW sensing specific subelement 600, in accordance with some demonstrative aspects. For example, sensing subelements 404 (Fig. 4) may include IMMW sensing specific subelement 600.

In some demonstrative aspects, as shown in Fig. 6, the IMMW sensing specific subelement 600 may include a subelement ID field 602.

For example, the subelement ID field 602 may be set to a value greater than 2, e.g., to identify that the subelement 600 is to be interpreted as an IMMW sensing specific subelement.

In some demonstrative aspects, the subelement ID field 602 may be set to a value of 3, e.g., in accordance with Table 2.

In other aspects, the subelement ID field 602 may be set to any other suitable value greater than 2.

In some demonstrative aspects, as shown in Fig. 6, the IMMW sensing specific subelement 600 may include an IMMW information fields subelement 604.

In some demonstrative aspects, the IMMW information fields subelement 604 may include IMMW-specific information, for example, to configure sensing measurements between IMMW STAs.

Referring back to Fig. 4, in some demonstrative aspects, as shown in line 5 of Table 2, the sensing subelements 404 may include a link ID bitmap subelement.

In some demonstrative aspects, as shown in line 4 of Table 2, a subelement ID of the link ID bitmap subelement may be set to a value of 4.

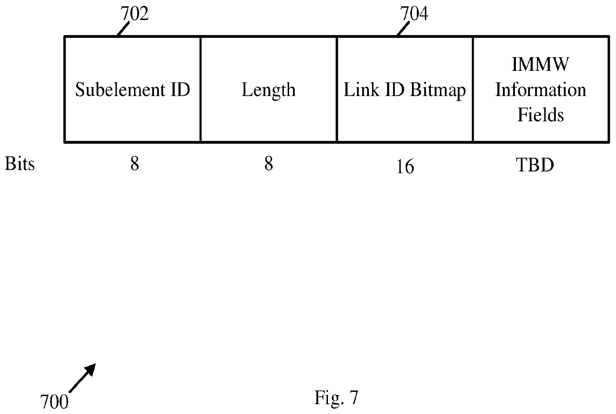

Reference is made to Fig. 7, which schematically illustrates a format of a link ID bitmap subelement 700, in accordance with some demonstrative aspects. For example, sensing subelements 404 (Fig. 4) may include link ID bitmap subelement 700.

In some demonstrative aspects, as shown in Fig. 7, the link ID bitmap subelement 700 may include a subelement ID field 702.

For example, the subelement ID field 702 may be set to a value greater than 2, e.g., to identify that the subelement 700 is to be interpreted as a link ID bitmap subelement.

In some demonstrative aspects, the subelement ID field 702 may be set to a value of 4, e.g., in accordance with Table 2.

In other aspects, the subelement ID field 702 may be set to any other suitable value greater than 2.

In some demonstrative aspects, as shown in Fig. 7, the link ID bitmap subelement 700 may include a link ID bitmap 704, which may include a plurality of bits to identify one or more wireless communication links for a sensing measurement session, e.g., as described above.

Referring back to Fig. 4, in some demonstrative aspects, sensing measurement parameters 402 may include a link ID bitmap present field, for example, to indicate presence of the link ID information in a link ID bitmap subelement, e.g., the link ID bitmap subelement 700 (Fig. 7), which may be included in the sensing subelements 404, e.g., as described below.

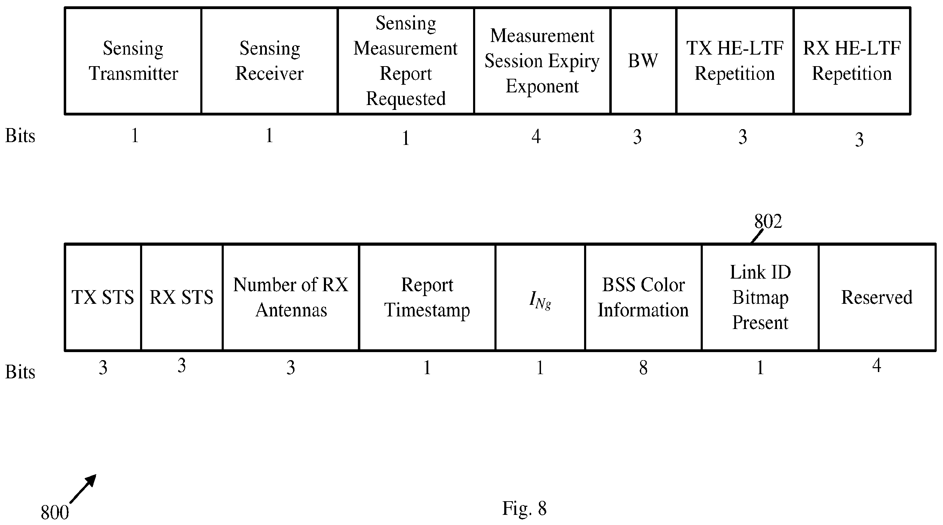

Reference is made to Fig. 8, which schematically illustrates a format of a sensing measurement parameters subelement 800, in accordance with some demonstrative aspects. For example, sensing measurement parameters subelement 400 (Fig. 4) may include one or more fields of sensing measurement parameters subelement 800.

In some demonstrative aspects, as shown in Fig. 8, the sensing measurement parameters subelement 800 may include a link ID bitmap present field 802.

In some demonstrative aspects, the link ID bitmap present field 802 may be set to a predefined value, e.g., 1, for example, to indicate presence of a link ID information subelement.

In some demonstrative aspects, the link ID bitmap present field 802 may be configured to indicate whether a link ID bitmap subelement, e.g., the link ID bitmap subelement 700 (Fig. 7), is included in the same sensing measurement parameters subelement, which includes the link ID bitmap present field 802, e.g., sensing measurement parameters subelement 402 (Fig. 4).

In some demonstrative aspects, the link ID bitmap present field 802 may be set to indicate whether cross-link sensing measurement session negotiation and setup is performed.

For example, the link ID bitmap present field 802 may be set to 1, for example, to indicate that the link ID bitmap subelement is included, and that the sensing parameters, e.g., in other fields of the sensing measurement parameters subelement 800, are not for the current link but for a different link, e.g., a link indicated by the link ID bitmap subelement.

For example, the link ID bitmap present field 802 may be set to 0, for example, to indicate that the sensing parameters, e.g., in other fields of the sensing measurement parameters subelement 800, are for the current link, and that no link ID bitmap subelement is included.

Referring back to Fig. 1, in some demonstrative aspects, device 102 and/or device 140 may implement one or more operations and/or functionalities of a link ID information signaling mechanism, which may support cross-link sensing measurement session negotiation and setup, for example, via an MLO link info element, e.g., as described below.

In some demonstrative aspects, device 102 and/or device 140 may implement one or more operations and/or functionalities of a link ID information signaling mechanism, which may be configured to support communication of a link ID bitmap in an MLO link info element, for example, as part of a sensing measurement request frame, e.g., as described below.

In some demonstrative aspects, device 102 and/or device 140 may implement one or more operations and/or functionalities of a link ID information signaling mechanism, which may support communication of a link ID bitmap in an MLO link info element, for example, as part of a sensing measurement response frame, e.g., as described below.

For example, an MLO link info element may be configured in accordance with the *IEEE 802.11be Standard.* For example, the MLO Link Info element may be included within a sensing measurement request/response frame.

For example, the MLO link info element may be carried in an individually addressed management frame, for example, to identify a link that an intended STA affiliated with a peer MLD is operating on. For example, the intended STA may include an intended recipient of contents of the management frame carrying the MLO link info element.

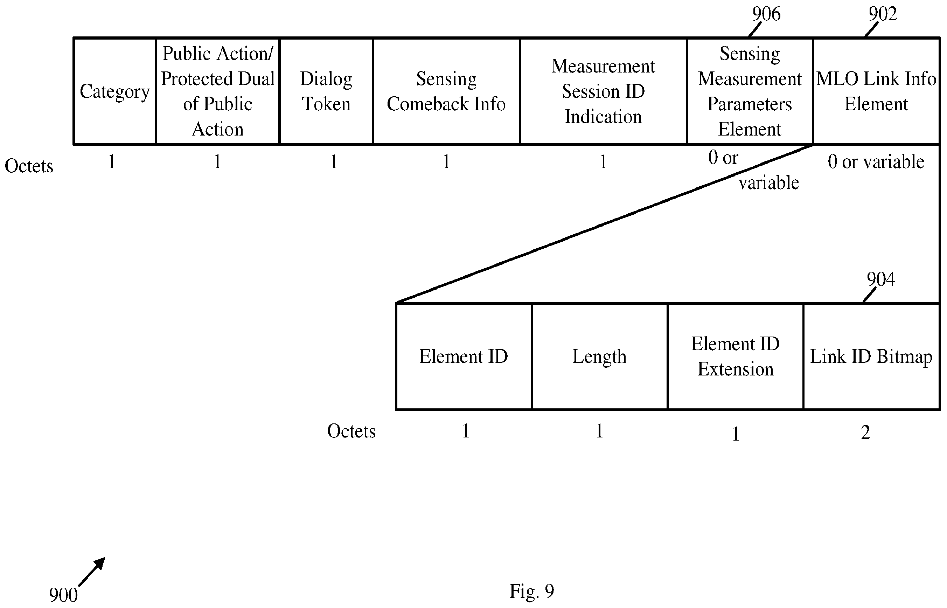

Reference is made to Fig. 9, which schematically illustrates a format of a sensing measurement request frame 900, in accordance with some demonstrative aspects.

In some demonstrative aspects, as shown in Fig. 9, the sensing measurement request frame 900 may include an MLO link info element 902.

In some demonstrative aspects, as shown in Fig. 9, the MLO link info element 902 may be after a sensing measurement parameters element 906. For example, sensing measurement parameters element 906 may include one or more, e.g., some or all, fields of sensing measurement parameters element 400 (Fig. 4).

In some demonstrative aspects, as shown in Fig. 9, the MLO link info element 902 may include a link ID bitmap subelement 904.

In some demonstrative aspects, link ID bitmap subelement 904 may include link ID information, e.g., a link ID bitmap, to identify one or more wireless communication links for a sensing measurement session, e.g., as described above. For example, the link ID information may identify that one or more sensing measurement parameters in the sensing measurement parameters element 906 are to be applied to configure the one or more wireless communication links identified by the ID bitmap subelement 904, e.g., as described above.

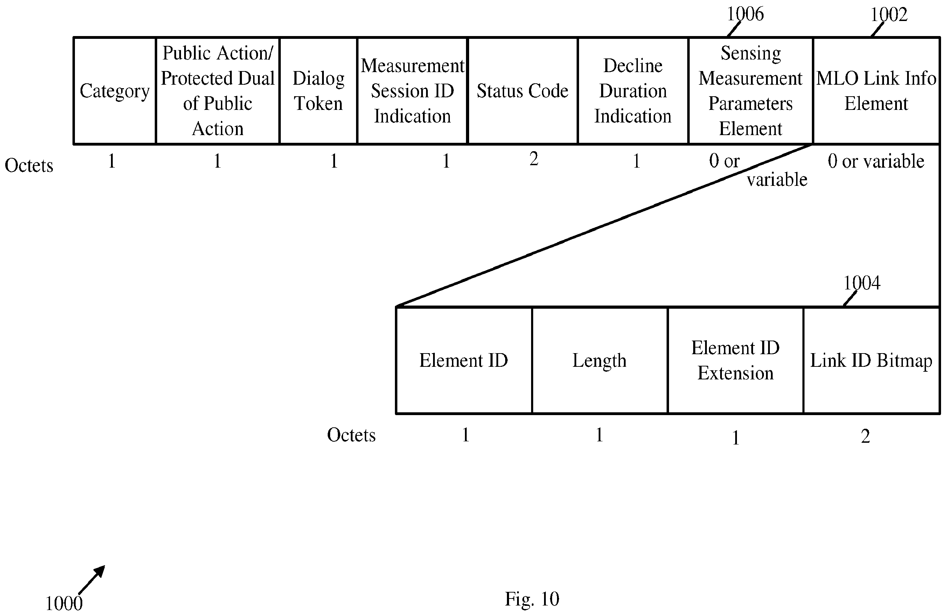

Reference is made to Fig. 10, which schematically illustrates a format of a sensing measurement response frame 1000, in accordance with some demonstrative aspects.

In some demonstrative aspects, as shown in Fig. 10, the sensing measurement response frame 1000 may include an MLO link info element 1002.

In some demonstrative aspects, as shown in Fig. 10, the MLO link info element 1002 may be after a sensing measurement parameters element 1006. For example, sensing measurement parameters element 1006 may include one or more, e.g., some or all, fields of sensing measurement parameters element 400 (Fig. 4).

In some demonstrative aspects, as shown in Fig. 10, the MLO link info element 1002 may include a link ID bitmap subelement 1004.

In some demonstrative aspects, link ID bitmap subelement 1004 may include link ID information, e.g., a link ID bitmap, to identify one or more wireless communication links for a sensing measurement session, e.g., as described above. For example, the link ID information may identify that one or more sensing measurement parameters in the sensing measurement parameters element 1006 are to be applied to configure the one or more wireless communication links identified by the ID bitmap subelement 1004, e.g., as described above.

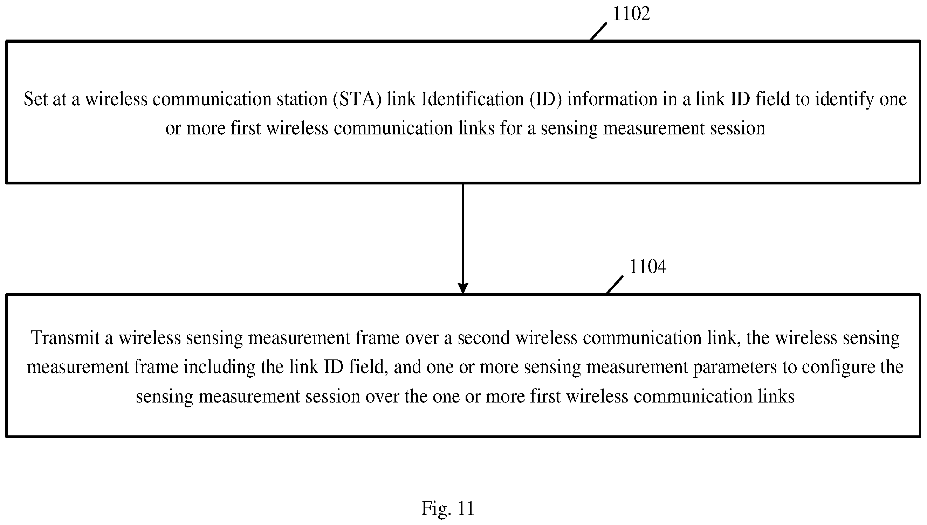

Reference is made to Fig. 11, which schematically illustrates a method of a sensing measurement session, in accordance with some demonstrative aspects. For example, one or more of the operations of the method of Fig. 11 may be performed by one or more elements of a system, e.g., system 100 (Fig. 1), for example, one or more wireless devices, e.g., device 102 (Fig. 1) and/or device 140 (Fig. 1), an MLD, e.g., MLD 131 (Fig. 1) and/or MLD 151 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 1102, the method may include setting, at a STA, link ID information in a link ID field, for example to identify one or more first wireless communication links for a sensing measurement session. For example, controller 154 (Fig. 1) may be configured to cause, trigger, and/or control device 140 (Fig. 1) to set link ID information in a link ID field, for example, to identify one or more first wireless communication links for a sensing measurement session, e.g., as described above.

As indicated at block 1104, the method may include transmitting a wireless sensing measurement frame over a second wireless communication link. For example, the wireless sensing measurement frame may include the link ID field, and one or more sensing measurement parameters to configure the sensing measurement session over the one or more first wireless communication links. For example, controller 154 (Fig. 1) may be configured to cause, trigger, and/or control device 140 (Fig. 1) to transmit the wireless sensing measurement frame over a second wireless communication link, for example, to configure the sensing measurement session over the one or more first wireless communication links, e.g., as described above.

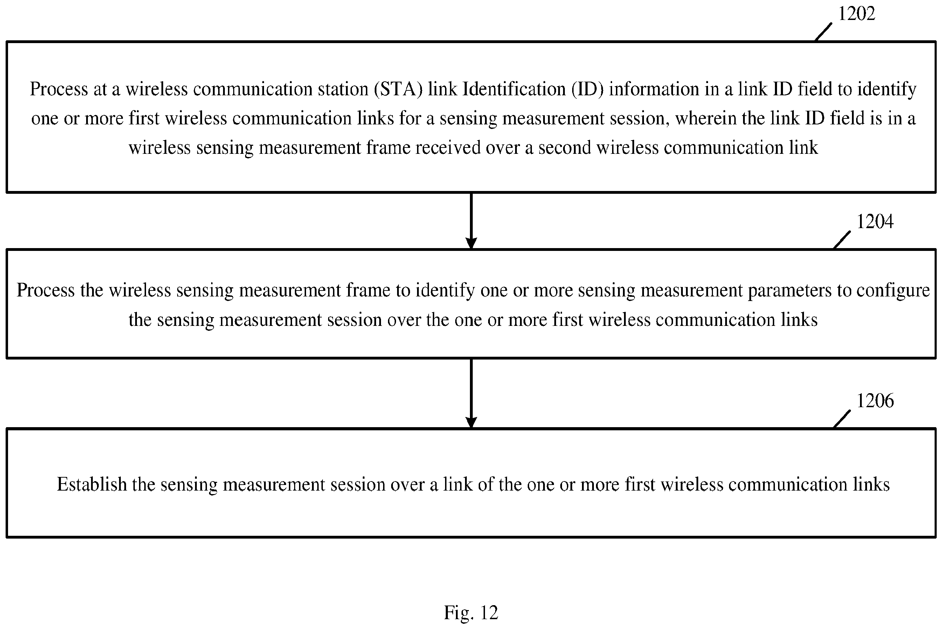

Reference is made to Fig. 12, which schematically illustrates a method of a sensing measurement session, in accordance with some demonstrative aspects. For example, one or more of the operations of the method of Fig. 12 may be performed by one or more elements of a system, e.g., system 100 (Fig. 1), for example, one or more wireless devices, e.g., device 102 (Fig. 1) and/or device 140 (Fig. 1), an MLD, e.g., MLD 131 (Fig. 1) and/or MLD 151 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 1202, the method may include processing, at a STA, link ID information in a link ID field, for example, to identify one or more first wireless communication links for a sensing measurement session. For example, the link ID field may be in a wireless sensing measurement frame received over a second wireless communication link. For example, controller 124 (Fig. 1) may be configured to cause, trigger, and/or control device 102 (Fig. 1) to process link ID information in the link ID field, for example, to identify one or more first wireless communication links for a sensing measurement session, e.g., as described above.

As indicated at block 1204, the method may include processing the wireless sensing measurement frame to identify one or more sensing measurement parameters to configure the sensing measurement session over the one or more first wireless communication links. For example, controller 124 (Fig. 1) may be configured to cause, trigger, and/or control device 102 (Fig. 1) to process the wireless sensing measurement frame to identify one or more sensing measurement parameters to configure the sensing measurement session over the one or more first wireless communication links, e.g., as described above.

As indicated at block 1206, the method may include establishing the sensing measurement session over a link of the one or more first wireless communication links. For example, controller 124 (Fig. 1) may be configured to cause, trigger, and/or control device 102 (Fig. 1) to establish the sensing measurement session over a link of the one or more first wireless communication links, e.g., as described above.

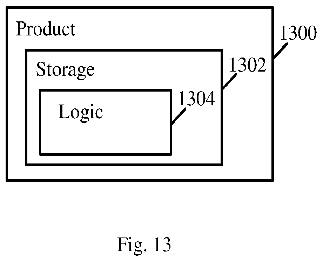

Reference is made to Fig. 13, which schematically illustrates a product of manufacture 1300, in accordance with some demonstrative aspects. Product 1300 may include one or more tangible computer-readable ("machine-readable") non-transitory storage media 1302, which may include computer-executable instructions, e.g., implemented by logic 1304, operable to, when executed by at least one computer processor, enable the at least one computer processor to implement one or more operations at device 102 (Fig. 1), device 140 (Fig. 1), MLD 131 (Fig. 1), MLD 151 (Fig. 1), radio 114 (Fig. 1), radio 144 (Fig. 1), transmitter 118 (Fig. 1), transmitter 148 (Fig. 1), receiver 116 (Fig. 1), receiver 146 (Fig. 1), message processor 128 (Fig. 1), message processor 158 (Fig. 1), controller 124 (Fig. 1), and/or controller 154 (Fig. 1); to cause device 102 (Fig. 1), device 140 (Fig. 1), MLD 131 (Fig. 1), MLD 151 (Fig. 1), radio 114 (Fig. 1), radio 144 (Fig. 1), transmitter 118 (Fig. 1), transmitter 148 (Fig. 1), receiver 116 (Fig. 1), receiver 146 (Fig. 1), message processor 128 (Fig. 1), message processor 158 (Fig. 1), controller 124 (Fig. 1), and/or controller 154 (Fig. 1), to perform, trigger and/or implement one or more operations and/or functionalities; and/or to perform, trigger and/or implement one or more operations and/or functionalities described with reference to the Figs. 1-12, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 1300 and/or machine readable storage media 1302 may include one or more types of computer-readable storage media capable of storing data, including volatile memory, non-volatile memory, removable or non-removable memory, erasable or non-erasable memory, writeable or re-writeable memory, and the like. For example, machine readable storage media 1302 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 1304 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 1304 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus comprising logic and circuitry configured to cause a wireless communication station (STA) to set link Identification (ID) information in a link ID field to identify one or more first wireless communication links for a sensing measurement session; and transmit a wireless sensing measurement frame over a second wireless communication link, the wireless sensing measurement frame comprising the link ID field, and one or more sensing measurement parameters to configure the sensing measurement session over the one or more first wireless communication links.

Example 2 includes the subject matter of Example 1, and optionally, wherein the link ID information comprises a link ID bitmap, the link ID field comprises a link ID bitmap field, the link ID bitmap comprising a plurality of bits corresponding to a plurality of links, wherein a setting of the plurality of bits is to identify the one or more first wireless communication links for the sensing measurement session.

Example 3 includes the subject matter of Example 2, and optionally, wherein the apparatus is configured to cause the STA to set a bit corresponding to a link of the plurality of links to a predefined bit value to indicate that the one or more sensing measurement parameters are to configure the sensing measurement session over the link.

Example 4 includes the subject matter of Example 3, and optionally, wherein the predefined bit value is one.

Example 5 includes the subject matter of any one of Examples 1-3, and optionally, wherein the apparatus is configured to cause the STA to set the link ID field in a sensing measurement parameters element in the wireless sensing measurement frame, wherein the sensing measurement parameters element comprises the one or more sensing measurement parameters.

Example 6 includes the subject matter of Example 5, and optionally, wherein the apparatus is configured to cause the STA to set the link ID field in a sensing subelement in the sensing measurement parameters element.

Example 7 includes the subject matter of Example 6, and optionally, wherein the sensing subelement comprises an Integrated millimeterWave (IMMW) sensing specific subelement comprising information to configure sensing measurements between IMMW STAs.

Example 8 includes the subject matter of Example 6, and optionally, wherein the sensing subelement comprises a link ID information subelement.

Example 9 includes the subject matter of Example 8, and optionally, wherein the apparatus is configured to cause the STA to set a link ID information present field in the sensing measurement parameters element to a predefined value to indicate presence of the link ID information subelement.

Example 10 includes the subject matter of any one of Examples 6-9, and optionally, wherein the sensing subelement is after a sensing measurement parameters field comprising the one or more sensing measurement parameters.

Example 11 includes the subject matter of any one of Examples 6-10, and optionally, wherein the apparatus is configured to cause the STA to set a subelement ID field in the sensing subelement to a value greater than 2.

Example 12 includes the subject matter of any one of Examples 1-11, and optionally, wherein the apparatus is configured to cause the STA to set the link ID field in a Multi-Link Operation (MLO) link information (info) element in the wireless sensing measurement frame, wherein the wireless sensing measurement frame comprises a sensing measurement parameters element comprising the one or more sensing measurement parameters.

Example 13 includes the subject matter of Example 12, and optionally, wherein the MLO link info element is after the sensing measurement parameters element.

Example 14 includes the subject matter of any one of Examples 1-13, and optionally, wherein the link ID field comprises 16 bits.

Example 15 includes the subject matter of any one of Examples 1-14, and optionally, wherein the wireless sensing measurement frame comprises a wireless sensing measurement request frame.

Example 16 includes the subject matter of any one of Examples 1-15, and optionally, wherein the wireless sensing measurement frame comprises a wireless sensing measurement response frame.

Example 17 includes the subject matter of any one of Examples 1-16, and optionally, wherein the apparatus is configured to cause the STA to establish the sensing measurement session over a link of the one or more first wireless communication links.

Example 18 includes the subject matter of any one of Examples 1-17, and optionally, wherein the apparatus is configured to cause the STA to transmit the wireless sensing measurement frame as part of a cross-link sensing measurement session setup comprising negotiation of the sensing measurement session over the second wireless communication link, and establishment of the sensing measurement session over a negotiated link of the one or more first wireless communication links.

Example 19 includes the subject matter of any one of Examples 1-18, and optionally, wherein the one or more first wireless communication links comprises one or more millimeterWave (mmWave) links in a mmWave band, the second wireless communication link comprises a sub 10 Gigahertz (GHz) (sub-10GHz) link in a sub-10GHz band.

Example 20 includes the subject matter of any one of Examples 1-19, and optionally, wherein the one or more first wireless communication links comprises one or more first sub 10 Gigahertz (GHz) (sub-10GHz) links in a sub-10GHz band, and the second wireless communication link comprises a second sub-10GHz link in the sub-10GHz band.

Example 21 includes the subject matter of any one of Examples 1-20, and optionally, wherein the STA comprises a STA of a Multi-Link Device (MLD).

Example 22 includes the subject matter of any one of Examples 1-21, and optionally, wherein the STA comprises an Integrated millimeterWave (IMMW) STA.

Example 23 includes the subject matter of any one of Examples 1-22, and optionally, comprising a radio to transmit the wireless sensing measurement frame from the STA.

Example 24 includes the subject matter of Example 23, and optionally, comprising one or more antennas connected to the radio, and a processor to execute instructions of an operating system.

Example 25 includes an apparatus comprising logic and circuitry configured to cause a wireless communication station (STA) to process link Identification (ID) information in a link ID field to identify one or more first wireless communication links for a sensing measurement session, wherein the link ID field is in a wireless sensing measurement frame received over a second wireless communication link; process the wireless sensing measurement frame to identify one or more sensing measurement parameters to configure the sensing measurement session over the one or more first wireless communication links; and establish the sensing measurement session over a link of the one or more first wireless communication links.

Example 26 includes the subject matter of Example 25, and optionally, wherein the link ID information comprises a link ID bitmap, the link ID field comprises a link ID bitmap field, the link ID bitmap comprising a plurality of bits corresponding to a plurality of links, wherein a setting of the plurality of bits is to identify the one or more first wireless communication links for the sensing measurement session.

Example 27 includes the subject matter of Example 26, and optionally, wherein the apparatus is configured to cause the STA to process a bit corresponding to a link of the plurality of links to identify a predefined bit value to indicate that the one or more sensing measurement parameters are to configure the sensing measurement session over the link.

Example 28 includes the subject matter of Example 27, and optionally, wherein the predefined bit value is one.

Example 29 includes the subject matter of any one of Examples 25-28, and optionally, wherein the apparatus is configured to cause the STA to identify the link ID field in a sensing measurement parameters element in the wireless sensing measurement frame, wherein the sensing measurement parameters element comprises the one or more sensing measurement parameters.

Example 30 includes the subject matter of Example 29, and optionally, wherein the apparatus is configured to cause the STA to identify the link ID field in a sensing subelement in the sensing measurement parameters element.

Example 31 includes the subject matter of Example 30, and optionally, wherein the sensing subelement comprises an Integrated millimeterWave (IMMW) sensing specific subelement comprising information to configure sensing measurements between IMMW STAs.

Example 32 includes the subject matter of Example 30, and optionally, wherein the sensing subelement comprises a link ID information subelement.

Example 33 includes the subject matter of Example 32, and optionally, wherein the apparatus is configured to cause the STA to process a link ID information present field in the sensing measurement parameters element to identify a predefined value to indicate presence of the link ID information subelement.

Example 34 includes the subject matter of any one of Examples 30-33, and optionally, wherein the sensing subelement is after a sensing measurement parameters field comprising the one or more sensing measurement parameters.

Example 35 includes the subject matter of any one of Examples 30-34, and optionally, wherein a subelement ID field in the sensing subelement comprises a value greater than 2.

Example 36 includes the subject matter of any one of Examples 25-35, and optionally, wherein the apparatus is configured to cause the STA to identify the link ID field in a Multi-Link Operation (MLO) link information (info) element in the wireless sensing measurement frame, and to process the wireless sensing measurement frame to identify a sensing measurement parameters element comprising the one or more sensing measurement parameters.

Example 37 includes the subject matter of Example 36, and optionally, wherein the MLO link info element is after the sensing measurement parameters element.

Example 38 includes the subject matter of any one of Examples 25-37, and optionally, wherein the link ID field comprises 16 bits.

Example 39 includes the subject matter of any one of Examples 25-38, and optionally, wherein the wireless sensing measurement frame comprises a wireless sensing measurement request frame.

Example 40 includes the subject matter of any one of Examples 25-38, and optionally, wherein the wireless sensing measurement frame comprises a wireless sensing measurement response frame.

Example 41 includes the subject matter of any one of Examples 25-40, and optionally, wherein the apparatus is configured to cause the STA to process the wireless sensing measurement frame as part of a cross-link sensing measurement session setup comprising negotiation of the sensing measurement session over the second wireless communication link, and establishment of the sensing measurement session over a negotiated link of the one or more first wireless communication links.

Example 42 includes the subject matter of any one of Examples 25-41, and optionally, wherein the one or more first wireless communication links comprises one or more millimeterWave (mmWave) links in a mmWave band, the second wireless communication link comprises a sub 10 Gigahertz (GHz) (sub-10GHz) link in a sub-10GHz band.

Example 43 includes the subject matter of any one of Examples 25-42, and optionally, wherein the one or more first wireless communication links comprises one or more first sub 10 Gigahertz (GHz) (sub-10GHz) links in a sub-10GHz band, and the second wireless communication link comprises a second sub-10GHz link in the sub-10GHz band.

Example 44 includes the subject matter of any one of Examples 25-43, and optionally, wherein the STA comprises a STA of a Multi-Link Device (MLD).

Example 45 includes the subject matter of any one of Examples 25-44, and optionally, wherein the STA comprises an Integrated millimeterWave (IMMW) STA.

Example 46 includes the subject matter of any one of Examples 25-45, and optionally, comprising a radio to receive the wireless sensing measurement frame.

Example 47 includes the subject matter of Example 46, and optionally, comprising one or more antennas connected to the radio, and a processor to execute instructions of an operating system.

Example 48 includes a wireless communication device comprising the apparatus of any of Examples 1-47.

Example 49 includes a mobile device comprising the apparatus of any of Examples 1-47.

Example 50 includes an apparatus comprising means for executing any of the described operations of any of Examples 1-47.

Example 51 includes a product comprising one or more tangible computer-readable non-transitory storage media comprising instructions operable to, when executed by at least one processor, enable the at least one processor to cause a wireless communication device to perform any of the described operations of any of Examples 1-47.

Example 52 includes an apparatus comprising: a memory interface; and processing circuitry configured to: perform any of the described operations of any of Examples 1-47.

Example 53 includes a method comprising any of the described operations of any of Examples 1-47.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A method to be performed at a wireless communication station (STA), the method comprising:
setting link Identification (ID) information in a link ID field to identify one or more first wireless communication links for a sensing measurement session; and
transmitting a wireless sensing measurement frame over a second wireless communication link, the wireless sensing measurement frame comprising the link ID field, and one or more sensing measurement parameters to configure the sensing measurement session over the one or more first wireless communication links.

2. The method of claim 1, wherein the link ID information comprises a link ID bitmap, the link ID field comprises a link ID bitmap field, the link ID bitmap comprising a plurality of bits corresponding to a plurality of links, wherein a setting of the plurality of bits is to identify the one or more first wireless communication links for the sensing measurement session.

3. The method of claim 2 comprising setting a bit corresponding to a link of the plurality of links to a predefined bit value to indicate that the one or more sensing measurement parameters are to configure the sensing measurement session over the link.

4. The method of any one of claims 1-3 comprising setting the link ID field in a sensing measurement parameters element in the wireless sensing measurement frame, wherein the sensing measurement parameters element comprises the one or more sensing measurement parameters.

5. The method of claim 4 comprising setting the link ID field in a sensing subelement in the sensing measurement parameters element.

6. The method of claim 5, wherein the sensing subelement comprises an Integrated millimeterWave (IMMW) sensing specific subelement comprising information to configure sensing measurements between IMMW STAs, or a link ID information subelement.

7. The method of claim 5 or 6 comprising setting a subelement ID field in the sensing subelement to a value greater than 2.

8. The method of any one of claims 1-7 comprising setting the link ID field in a Multi-Link Operation (MLO) link information (info) element in the wireless sensing measurement frame, wherein the wireless sensing measurement frame comprises a sensing measurement parameters element comprising the one or more sensing measurement parameters.

9. The method of any one of claims 1-8 comprising establishing the sensing measurement session over a link of the one or more first wireless communication links.

10. The method of any one of claims 1-9 comprising transmitting the wireless sensing measurement frame as part of a cross-link sensing measurement session setup comprising negotiation of the sensing measurement session over the second wireless communication link, and establishment of the sensing measurement session over a negotiated link of the one or more first wireless communication links.

11. The method of any one of claims 1-10, wherein the one or more first wireless communication links comprises one or more millimeterWave (mmWave) links in a mmWave band, the second wireless communication link comprises a sub 10 Gigahertz (GHz) (sub-10GHz) link in a sub-10GHz band.

12. The method of any one of claims 1-10, wherein the one or more first wireless communication links comprises one or more first sub 10 Gigahertz (GHz) (sub-10GHz) links in a sub-10GHz band, and the second wireless communication link comprises a second sub-10GHz link in the sub-10GHz band.

13. An apparatus comprising a controller configured to cause a wireless communication station (STA) to perform the method of any one of claims 1-12.

14. The apparatus of claim 13 comprising a radio to transmit the wireless sensing measurement frame from the STA, one or more antennas connected to the radio, and a processor to execute instructions of an operating system.

15. A product comprising one or more tangible computer-readable non-transitory storage media comprising instructions operable to, when executed by at least one processor, enable the at least one processor to cause a wireless communication station (STA) to perform the method of any one of claims 1-12.
